# EUROPÄISCHE PATENTSCHRIFT

(11) **EP 1 126 990 B1**
(45) Veröffentlichungstag und Bekanntmachung des Hinweises auf die Patenterteilung: **10.12.2003**
(21) Anmeldenummer: 99960810.2
(22) Anmeldetag: 15.10.1999
(51) Int. Cl.: B60N 2/00

(54) **Vorrichtung zur lösbaren Befestigung eines Fahrzeugsitzes oder von Teilen eines Fahrzeugsitzes in einem Kraftfahrzeug**
Device for Releasably Fastening a Vehicle Seat or Parts of a Vehicle Seat in a Motor Vehicle
Dispositif pour la fixation amovible d'un siège de véhicule ou de parties d'un siège de véhicule dans un véhicule automobile

(30) Priorität: 05.11.1998 DE 19852540
(43) Veröffentlichungstag der Anmeldung: 29.08.2001
(73) Patentinhaber: Brose Fahrzeugteile GmbH & Co. KG Coburg, 96450 Coburg (DE)
(72) Erfinder: HOFMANN, Jochen, D-96328 Küps (DE); KRÖNER, Gregor, D-96120 Bischberg (DE)
(74) Vertreter: Baumgärtel, Gunnar, Dr.
(86) Internationale Anmeldenummer: DE9903397
(87) Internationale Veröffentlichungsnummer: WO00027664

(56) Entgegenhaltungen:
- EP-A- 0 863 042
- DE-A- 19 544 833

## Beschreibung

Die Erfindung betrifft eine Vorrichtung zur lösbaren Befestigung eines Fahrzeugsitzes oder von Teilen eines Fahrzeugsitzes in einem Kraftfahrzeug nach dem Oberbegriff des Patentanspruchs 1.

Eine solche Vorrichtung zur lösbaren Befestigung eines Fahrzeugsitzes ist aus der DE 195 44 833 A1 bekannt. Die bekannte Vorrichtung umfaßt einen hinteren, in Fahrtrichtung offenen Befestigungshaken, in den ein fahrzeugbodenseitiger Befestigungsbolzen eingreifen kann, und eine vordere Führungskulisse zum Abstützen des Fahrzeugsitzes auf dem vorderen Befestigungsbolzen sowie einen drehbar gelagerten, von einer Federkraft beaufschlagten, klauenartigen Verriegelungshebel, der den vorderen Befestigungsbolzen in der Führungskulisse arretiert. Dabei ist dem hinteren Befestigungsbolzen ein schwenkbar gelagertes klauenartiges, von einer Federkraft entgegen der Verriegelungsposition beaufschlagtes Primär-Verriegelungselement zugeordnet, dessen Lage bei Erreichen der Verriegelungsposition durch ein Sekundär-Verriegelungselement ebenfalls verriegelbar ist, und das vordere Primär-Verriegelungselement sowie das hintere Sekundär-Verriegelungselement sind durch eine Koppelstange miteinander verbunden.

Mit einer solchen Vorrichtung kann ein Fahrzeugsitz in einfacher Weise ver- und wieder entriegelt werden, um ihn in dem Fahrzeug zu befestigen bzw. aus dem Fahrzeug zu entnehmen. Wenn es sich bei dem Fahrzeugsitz um einen elektrifizierten Sitz handelt, der mit elektrischen Sitzverstelleinrichtungen versehen ist, dann wird die Vorrichtung zur Ver- und Entriegelung des Sitzes üblicherweise mit einer Entnahmesicherung kombiniert, die eine Entriegelung des Sitzes verhindert, solange dieser über entsprechende Steckerelemente an das Stromnetz des Fahrzeugs angeschlossen ist.

Durch diese zusätzliche Maßnahme soll verhindert werden, daß die elektrischen Verbindungselemente beschädigt werden, wenn versucht wird, den Sitz zu entriegeln und aus dem Fahrzeug zu entnehmen, obwohl die elektrischen Steckverbindungen noch nicht gelöst wurden. Die bekannten Entnahmesicherungen sind allerdings sehr aufwendig gestaltet und aus mehreren Funktionselementen zusammengesetzt.

Der Erfindung liegt die Aufgabe zugrunde, eine Vorrichtung zur lösbaren Befestigung eines Fahrzeugsitzes oder von Teilen eines Fahrzeugsitzes in einem Kraftfahrzeug zu schaffen, bei der mit einfachen Mitteln die Entnahme des Sitzes zuverlässig verhindert wird, solange dieser über entsprechende Kontaktelemente an das elektrische Bordnetz angeschlossen ist.

Diese Aufgabe wird erfindungsgemäß durch die Schaffung einer Vorrichtung mit den Merkmalen des Patentanspruchs 1 gelöst.

Danach besteht die Entnahmesicherung aus einem einzelnen Sicherungselement, das zwischen einem beweglichen Sperrelement des Verriegelungsmechanismus und einem mit dem Fahrzeugsitz verbundenen Anschlag angeordnet ist, wenn ein sitzseitiges elektrisches Kontaktelement mit einem entsprechenden fahrzeugseitigen elektrischen Kontaktelement gekoppelt ist, wobei beim Versuch einer Entriegelung das Sicherungselement von dem Sperrelement gegen den Anschlag gedrückt wird.

Bei der erfindungsgemäßen Lösung wird die Entriegelung des Sitzes dadurch verhindert, daß durch das Sicherungselement die Bewegung eines dem Verriegelungsmechanismus zugeordneten Sperrelementes eingeschränkt wird. Denn beim Versuch einer Entriegelung des Sitzes drückt dieses Sperrelement das Sicherungselement gegen einen Anschlag, und eine weitere Bewegung des Sperrelementes wird dadurch vermieden. Da dieses Sperrelement mit dem Verriegelungsmechanismus gekoppelt ist, wird die zur Entriegelung notwendige Bewegung des Verriegelungsmechanismus insgesamt verhindert.

Die bei dem Versuch einer Entriegelung von einer Bedienperson aufgewandte Kraft wird dabei von dem Sicherungselement in den Anschlag eingeleitet und von diesem absorbiert. Dadurch wird eine Beschädigung des Verriegelungsmechanismus oder der Entnahmesicherung bei einem gewaltsamen Versuch der Entriegelung des Sitzes ausgeschlossen.

Die erfindungsgemäße Lösung zeichnet sich insbesondere durch einen einfachen Aufbau der Entnahmesicherung aus, die aus nur einem einzigen Bauelement besteht, sowie durch eine hohe Stabilität, da etwaige auf die Entnahmesicherung einwirkende Kräfte von einem Anschlag aufgenommen werden.

Bei einer bevorzugten Ausführungsform der Erfindung ist das Sicherungselement zur Verhinderung einer Entriegelung derart zwischen dem Sperrelement und dem Anschlag angeordnet, daß das Sicherungselement im wesentlichen nur Druckkräfte auf den Anschlag überträgt. Dies kann beispielsweise dadurch erreicht werden, daß die von dem Sperrelement auf das Sicherungselement ausgeübten Kräfte direkt auf den Anschlag gerichtet sind.

Ferner greift das Sperrelement vorzugsweise an der Seite des Sicherungselementes an, die eventuell auftretenden Scherkräften das größte Widerstandsmoment entgegensetzt. Im Fall eines flächig ausgebildeten Sicherungselementes sollten die von dem Sperrelement ausgeübten Kräfte an einer Kante des flächigen Sicherungselementes angreifen und dabei entlang der Fläche gerichtet sein.

Um einen einfachen Aufbau der Entnahmesicherung zu erreichen, ist das Sicherungselement vorzugsweise einstückig als Blechteil oder als Outsert-Teil ausgebildet, bei dem in eine Kunststoffhülle metallische Funktionsbereiche eingespritzt sind.

Gemäß einer Ausführungsform der Erfindung ist das Sicherungselement schwenkbar mit einem Teil des Fahrzeugsitzes verbunden, wobei die Schwenkbarkeit vorzugsweise durch einen in das Sicherungselement integrierten Biegebereich gewährleistet wird. Das Sicherungselement kann dabei einstückig in das Gehäuse des sitzseitigen elektrischen Kontaktelementes integriert sein. Andererseits kann das Sicherungselement mit dem Fahrzeugsitz über ein Einhängung verbunden sein.

Bei der vorstehend erläuterten Ausführungsform der Erfindung weist das Sicherungselement vorzugsweise einen Betätigungsabschnitt auf, über den das Sicherungselement mit dem fahrzeugseitigen Kontaktelement in Wirkverbindung tritt, wenn dieses mit dem sitzseitigen Kontaktelement gekoppelt wird, wodurch das Sicherungselement zwischen das Sperrelement und den Anschlag geführt wird.

Weiterhin kann an das Sicherungselement einstückig ein federnder Abschnitt angeformt sein, über den sich das Sicherungselement an dem Fahrzeugsitz abstützt und der einer Einführung des Sicherungselementes zwischen das Sperrelement und den Anschlag entgegenwirkt. Dieser federnde Abschnitt sorgt dafür, daß das Sicherungselement automatisch seine Position zwischen dem Sperrelement und dem Anschlag verläßt, wenn das sitzseitige elektrische Kontaktelement nicht mit dem fahrzeugseitigen elektrischen Kontaktelement gekoppelt ist. Der Sitz kann dann ohne weiteres entriegelt und aus dem Fahrzeug entnommen werden.

Gemäß einer anderen Variante der Erfindung ist das Sicherungselement mit dem fahrzeugseitigen Kontaktelement verbunden und insbesondere einstückig in dessen Gehäuse integriert. Bei dieser Variante der Erfindung gerät das Sicherungselement automatisch zwischen das Sperrelement und den zugehörigen Anschlag, wenn das fahrzeugseitige Kontaktelement mit dem sitzseitigen Kontaktelement gekoppelt wird.

Wenn der lösbar mit dem Fahrzeug zu verbindende Sitz eine Sitzlängsverstellung aufweist, ist der Verriegelungsmechanismus vorzugsweise über mindestens einen Lagerbock mit der Unterschiene der Sitzlängsverstellung verbunden, wobei dann auch der Anschlag an diesem Lagerbock ausgebildet ist.

Der Lagerbock weist ferner eine Durchgriffsöffnung auf, durch die hindurch das Sicherungselement zwischen dem Sperrelement und dem zugehörigen Anschlag angeordnet werden kann.

Das Sperrelement lagert dabei vorzugsweise auf derselben Achse wie ein Verriegelungselement des Verriegelungsmechanismus und ist zusammen mit diesem verschwenkbar.

Bei den Kontaktelementen, über die die elektrischen Einrichtungen des Fahrzeugsitzes mit dem elektrischen Bordnetz des Fahrzeugs verbunden werden, kann es sich insbesondere um einen Stecker und eine Steckdose handeln.

Weitere Vorteile der Erfindung werden bei der nachfolgenden Beschreibung von Ausführungsbeispielen anhand der Figuren deutlich werden.

Es zeigen:
- Figur 1 -: einen Verriegelungsmechanismus mit einer nicht aktivierten Entnahmesicherung im verriegelten Zustand;
- Figur 2 -: den Verriegelungsmechanismus aus Figur 1 im entriegelten Zustand;
- Figur 3 -: eine komplette Unterschiene einer Sitzlängsverstellung mit dem Verriegelungsmechanismus aus Figur 1 und 2;
- Figur 4 -: den Verriegelungsmechanismus aus Figur 1 im verriegelten Zustand mit einer aktivierten Entnahmesicherung;
- Figur 5 -: eine komplette Unterschiene einer Sitzlängsverstellung mit dem Verriegelungsmechanismus aus Figur 4;
- Figur 6 -: ein Ausführungsbeispiel eines Sicherungselementes, das als Entnahmesicherung in dem Verriegelungsmechanismus gemäß Figur 1 bis 5 verwendet wird;
- Figur 7 -: ein zweites Beispiel eines Sicherungselementes, das als Entnahmesicherung in dem Verriegelungsmechanismus gemäß den Figuren 1 bis 5 verwendet werden kann;
- Figur 8 -: einen Verriegelungsmechanismus mit einem Sicherungselement, das in ein fahrzeugseitiges Steckerelement integriert ist.

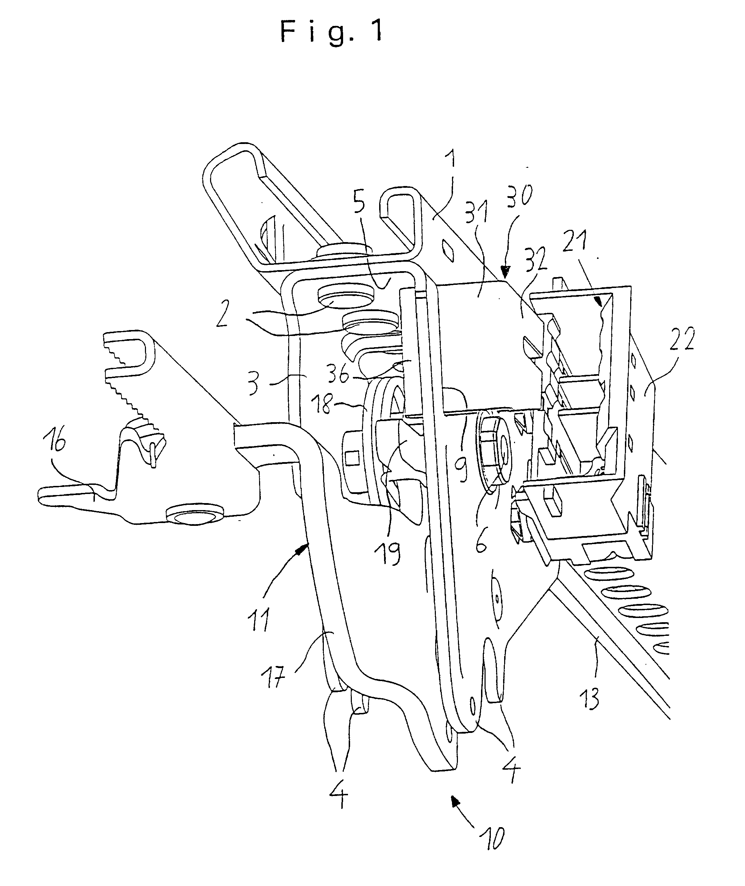

In Figur 1 ist perspektivisch ein Endabschnitt der Unterschiene 1 einer Schienenführung für die Längsverstellung eines Kraftfahrzeugsitzes dargestellt. An diesem Endabschnitt der Unterschiene 1 ist über Befestigungselemente 2 ein im wesentlichen U-förmiger Lagerbock 3 befestigt, der an seinen der Unterschiene 1 abgewandten Enden in zwei Hakenpaaren 4 ausläuft.

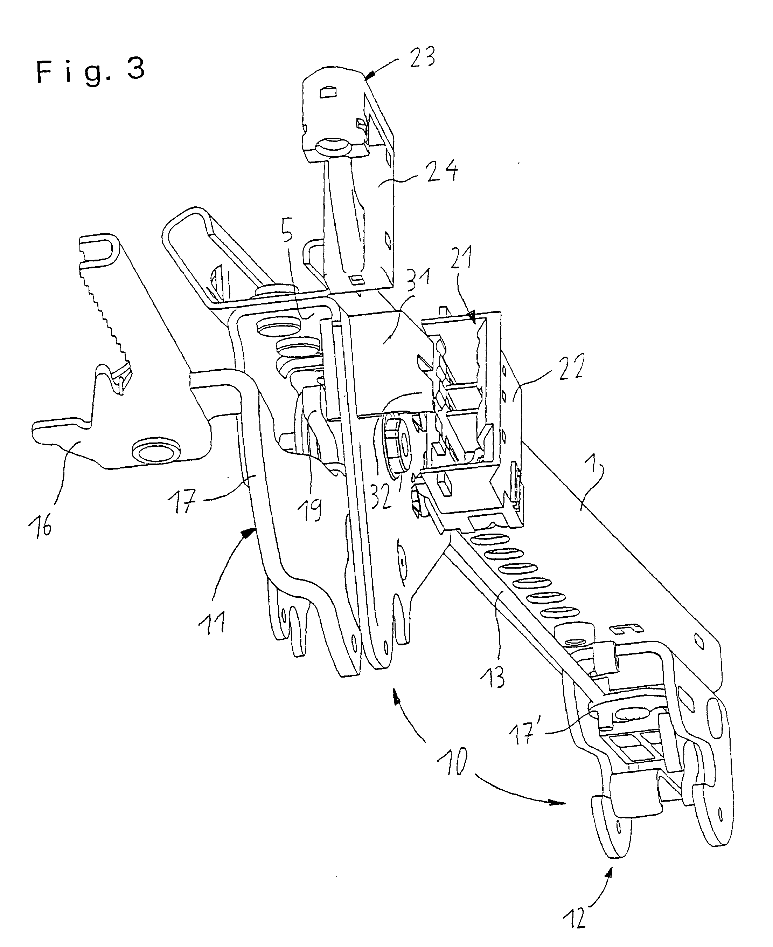

Der Lagerbock 3 nimmt die vordere Verriegelungseinrichtung 11 eines Verriegelungsmechanismus 10 (vergl. Figur 3) auf, über den sich die Unterschiene 1 und damit der gesamte Fahrzeugsitz lösbar an der Bodengruppe eines Kraftfahrzeuges befestigen läßt.

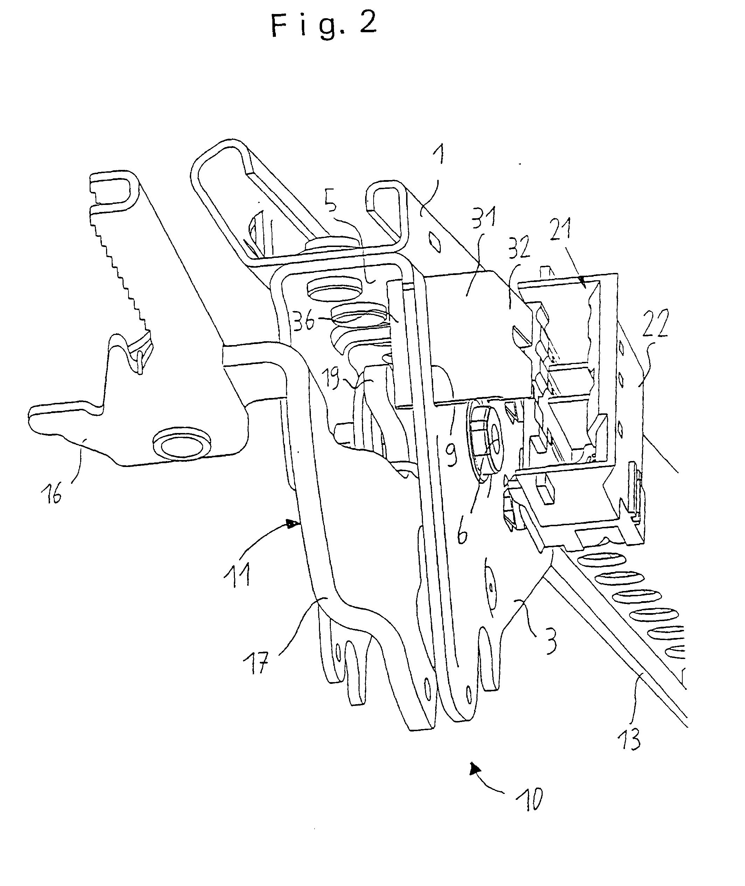

Die vordere Verriegelungseinrichtung 11 umfaßt ein um eine Achse 6 schwenkbar Verriegelungselement 17, das durch eine Drehfeder 18 unter Vorspannung in seiner Verriegelungsposition gehalten wird, in der die Unterschiene 1 an der Bodengruppe des Kraftfahrzeugs befestigt ist. Diese Verriegelungsposition kann mittels eines Betätigungshebels 16 aufgehoben werden, indem das Verriegelungselement 17 um die Achse 6 in die in Figur 2 gezeigte Entriegelungsposition geschwenkt wird.

Der Aufbau und die Funktion eines solchen Verriegelungsmechanismus sind bekannt und sollen daher hier nicht näher beschrieben werden. Hinsichtlich weiterer Einzelheiten betreffend den Aufbau und die Funktion eines vergleichbaren Verriegelungsmechanismus wird beispielhaft auf die DE 195 44 833 sowie die dort zitierten Schriften verwiesen.

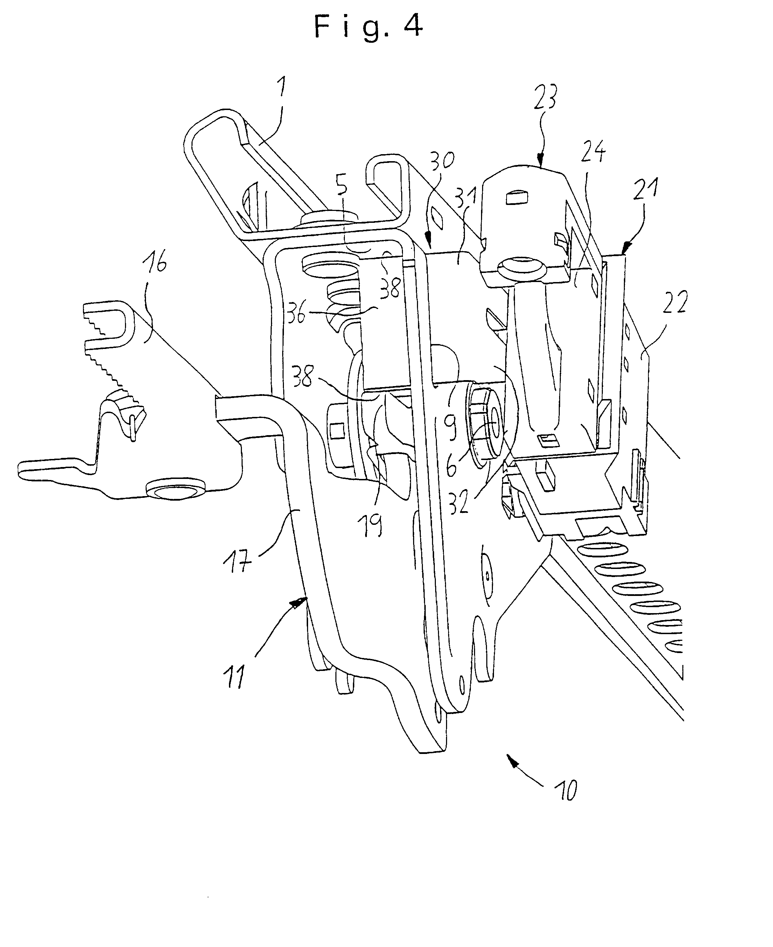

Vorliegend ist an dem Lagerbock 3 neben der Verriegelungseinrichtung 11 noch ein Stecker 21 mit einem Steckergehäuse 22 befestigt, über den dem Fahrzeugsitz Strom zugeführt werden kann, indem ein mit der zentralen Stromversorgung verbundener Stecker in die Steckdose 21 eingeführt wird, vergl. Figur 4. Diese Versorgung des Kraftfahrzeugsitzes mit Strom ist erforderlich, um elektrischen Verstellvorrichtungen des Sitzes, wie z.B. einer Sitzlängsverstellung, einer Sitzhöhen- und Sitzneigungsverstellung sowie einer Kopfstützenhöhenverstellung etc. die erforderliche Energie zuführen zu können.

Um zu verhindern, daß elektrische Bauelemente beschädigt werden, wenn versucht wird, den Sitz aus dem Fahrzeug zu entnehmen, obwohl der Sitz über die Steckdose 21 an die zentrale Stromversorgung angeschlossen ist, ist der Verriegelungsmechanismus 10 mit einer Entnahmesicherung 30 versehen.

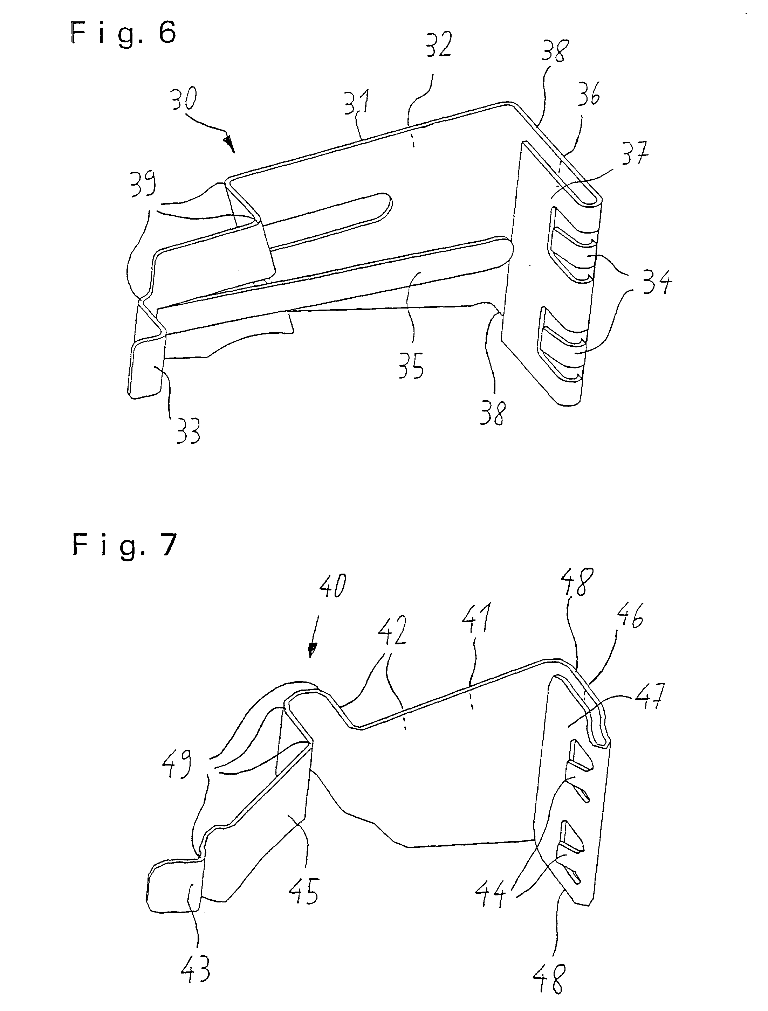

Diese Entnahmesicherung 30 umfaßt ein einzelnes, einteiliges, als Blechteil ausgebildetes Sicherungselement 31, das an seinem vorderen Ende über eine Einhängug 33 (vergl. Fig. 6) schwenkbar mit dem Lagerbock 3 verbunden ist. Das Sicherungselement 31 weist eine leicht schräg zu der Einführrichtung eines Steckers in die Steckdose 21 verlaufende Betätigungsfläche 32 sowie einen hiervon abgewinkelten flächigen Abschnitt 36 auf, wobei letzterer durch eine Durchgriffsöffnung 9 in dem Lagerbock 3 hindurch in Richtung auf das Verriegelungselement 17 weist.

In Figur 1 ist der verriegelte Zustand der vorderen Verriegelungseinrichtung 11 gezeigt, wobei der Fahrzeugsitz über die Steckdose 21 nicht an die zentrale Stromversorgung angeschlossen ist. In diesem Zustand kann die vordere Verriegelungseinrichtung 11 entriegelt werden, indem der Hebel 16 nach oben bewegt wird, wodurch sich das Verriegelungselement 17 im Uhrzeigersinn um die Schwenkachse 6 dreht. Die Bewegung des Verriegelungselements 17 wird dabei über eine Koppelstange 13 auf die hintere Verriegelungseinrichtung 12 des Verriegelungsmechanismus 10 (vgl. Figur 3) übertragen. Auch hierzu können weitere Einzelheiten beispielhaft der DE 195 44 833 A1 entnommen werden.

Durch die vorstehend beschriebene Betätigung des Hebels 16 nimmt das Verriegelungselement 17 die in den Figuren 2 und 3 gezeigte Entriegelungsposition ein, in der die Unterschiene 1 nicht mehr fest mit der Bodengruppe des Fahrzeugs verbunden ist, so daß der Sitz aus dem Fahrzeug entnommen werden kann. Anhand Figur 3 ist dabei auch erkennbar, wie die Koppelstange 13 eine Bewegung des vorderen Verriegelungselementes 17 auf ein der hinteren Verriegelungseinrichtung 12 zugeordnetes Verriegelungselement 17' überträgt, so daß auch im Bereich der hinteren Verriegelungseinrichtung 12 die Verbindung zwischen der Unterschiene 1 und der Bodengruppe des Kraftfahrzeugs gelöst wird.

Ferner wird anhand der Figuren 1 bis 3 deutlich, daß das Sicherungselement 31 die zur Entriegelung erforderliche Schwenkbewegung des Verriegelungselementes 17 nicht blokkiert. Denn das Sicherungselement 31 befindet sich mit seinem flächigen Abschnitt 36 nicht zwischen dem mit dem Verriegelungselement 17 verbundenen und als Blockiernase ausgebildeten Sperrelement 19 und dem diesem Sperrelement 19 zugeordneten Anschlag 5 an der Basisfläche des Lagerbockes 3. Demnach kann also der Verriegelungsmechanismus 10 ohne weiteres entriegelt werden, solange sich der Stecker 23 (vgl. Figur 3) außerhalb der Steckdose 21 befindet.

In Figur 4 ist die vordere Verriegelungseinrichtung 11 des Verriegelungsmechanismus 10 in ihrem verriegelten Zustand (entsprechend Figur 1) gezeigt, wobei hier aber zusätzlich ein mit dem zentralen Stromnetz des Kraftfahrzeuges verbundener und in einem Gehäuse 24 angeordneter Stecker 23 in die Steckdose 21 eingeführt ist.

Beim Einführen des Steckers 23 in die Steckdose 21 gleitet dieser über die leicht schräg verlaufende Betätigungsfläche 32 des schwenkbar mit dem Lagerbock verbundenen Sicherungselementes 31. Dadurch wird eine Schwenkbewegung des Sicherungselementes 31 ausgelöst, aufgrund der dessen abgewinkelter flächiger Abschnitt 36 durch die Öffnung 9 in dem Lagerbock 3 hindurch zwischen das Sperrelement 19 und den am Lagerbock 3 vorgesehenen Anschlag 5 geführt wird. In dieser Position wird durch das Sicherungselement 31 eine Entriegelung des Verriegelungsmechanismus 10 verhindert.

Wenn nämlich versucht wird, den Verriegelungsmechanismus 10 durch eine Bewegung des Hebels 16 nach oben zu entriegeln, so schwenkt das als Blockiernase ausgebildete Sperrelement 19 gemeinsam mit dem Verriegelungselement 17 um die Achse 6. Schon nach einer geringfügigen Schwenkbewegung gerät dabei aber das Sperrelement 19 in Kontakt mit der unteren Kante 38 des flächigen Abschnitts 36 des Sicherungselementes 31. Eine weitere Bewegung des Sperrelementes 19 ist dann unmöglich, weil der flächige Abschnitt 36 des Sicherungselementes 31 über seine Kanten 38 zwischen dem Sperrelement 19 und dem Anschlag 5 eingeklemmt wird. Da das Sperrelement 19 einstückig mit dem Verriegelungselement 17 verbunden ist, wird hierdurch eine Bewegung des Verriegelungsmechanismus insgesamt verhindert.

Es ist somit unmöglich, den Verriegelungsmechanismus 10 zu entriegeln, wenn sich der Stecker 23 in der Steckdose 21 befindet.

Wenn trotzdem unter Aufbringung großer Kräfte versucht wird, durch Betätigung des Hebels 16 eine Entriegelung herbeizuführen, so werden die über das Sperrelement 19 in den flächigen Abschnitt 36 des Sicherungselementes 31 eingeleiteten Kräfte von dem Anschlag 5 aufgenommen, der sich seinerseits an der Basisfläche der Unterschiene 1 abstützt. Durch diese sehr stabile Ausbildung der Entnahmesicherung 30 wird eine Beschädigung des Sicherungselementes 31 vermieden. Es kommt noch hinzu, daß das Sicherungselement 31 in seinem abgewinkelten flächigen Abschnitt 36 eine Versteifung aufweist (vgl. Figur 6) und daß der flächige Abschnitt 36 des Sicherungselementes 31 von dem Sperrelement 19 im wesentlichen nur mit Druckkräften belastet wird.

Denn die von dem Sperrelement 19 ausgeübten Kräfte sind direkt auf den Anschlag 5 gerichtet. Daher wirken auf den flächigen Abschnitt 36 keine Biegekräfte ein, die zu dessen Verformung führen könnten.

Der Einfluß etwaiger Scherkräfte wird dadurch minimiert, daß das Sperrelement 19 an einer Kante 38 des flächigen Abschnitts 36 angreift, wo den Scherkräften ein besonders großes Widerstandsmoment entgegenwirkt.

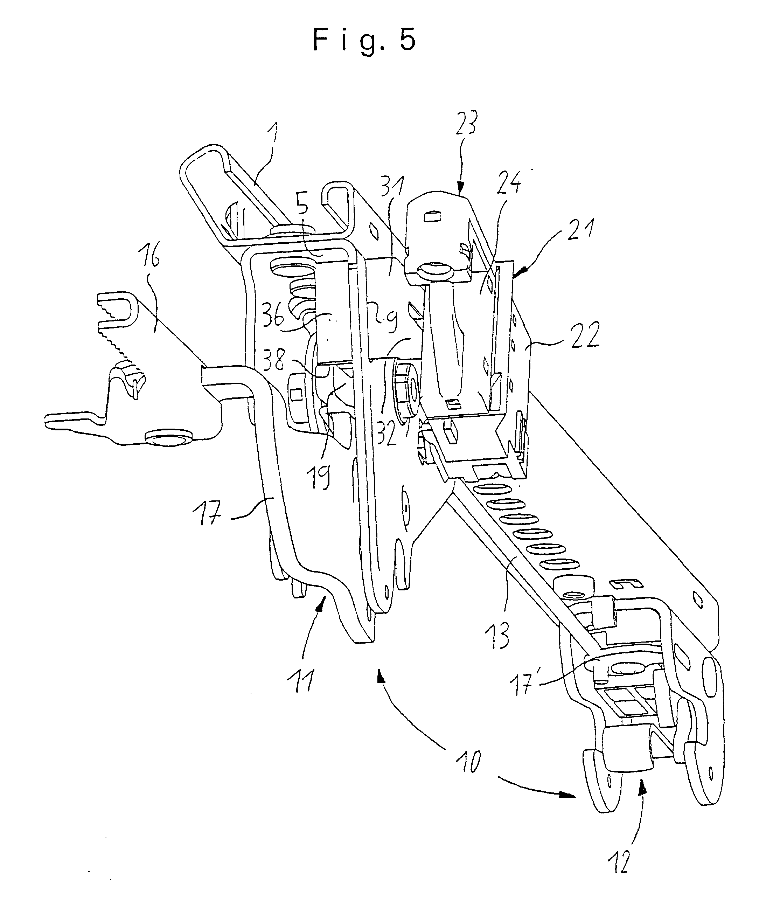

In Figur 5 ist die gesamte Unterschiene 1 einer Schienenlängsführung einschließlich des Verriegelungsmechanismus 10 dargestellt, wobei sich die vordere Verriegelungseinrichtung 11 in dem in Figur 4 gezeigten Zustand befindet. Mittels der Koppelstange 13 ist dabei gewährleistet, daß auch die hintere Verriegelungseinrichtung 12 verriegelt ist.

Im übrigen wird zu weiteren Einzelheiten der in den Figuren 4 und 5 dargestellten Verriegelungsvorrichtung auf die entsprechende Beschreibung der Figuren 1 bis 3 verwiesen. In den Figuren 1 bis 3 einerseits sowie den Figuren 4 und 5 andererseits sind übereinstimmende Bauteile jeweils mit den gleichen Bezugszeichen versehen.

In Figur 6 ist die aus einem einzelnen, als Blechteil ausgebildeten Sicherungselement 31 bestehende Entnahmesicherung 30 aus den Figuren 1 bis 5 näher dargestellt. Die Entnahmesicherung 31 umfaßt eine Betätigungsfläche 32 und einen davon abgewinkelten flächigen Abschnitt 36, der an seinen beiden Enden durch jeweils eine Kante 38 begrenzt wird. Diese Bestandteile des Sicherungselementes 31 sind bereits anhand der Figuren 1 bis 5 eingehend beschrieben worden.

Anhand Figur 6 ist zusätzlich erkennbar, daß der flächige Abschnitt 36 eine Versteifung 37 aufweist, die durch einen umgelegten Materialbereich gebildet wird. In diesem Materialbereich 37 sind auch zwei Clipselemente 34 ausgeformt, über die sich das Sicherungselement 31 in dem in den Figuren 1 bis 3 gezeigten Zustand von innen her an dem Rand der Durchgriffsöffnung 9 des Lagerbockes 3 abstützt.

An seinem vorderen Ende weist das Sicherungselement eine Einhängung 33 auf, über die das Sicherungselement 31 in eine geeignete Öffnung des Lagerbockes 3 eingehängt wird. An die Einhängung 33 schließt sich ein Abschnitt des Sicherungselementes 31 an, der als Biegebereich 39 dient. Dieser Bereich verformt sich, wenn ein Steckerelement 23, wie in Figur 4 gezeigt, auf dem Betätigungsabschnitt 32 des Sicherungselementes 31 einwirkt. Dadurch führt der flächige Abschnitt 36 des Sicherungselementes 31 eine Schwenkbewegung aus, bis er zwischen den Anschlag 5 und das Sperrelement 19 (vergl. Figur 4) gerät.

In das Sicherungselement 31 ist zudem noch ein Federabschnitt 35 einstückig integriert, über den sich das Sicherungselement 31 an der Außenwand des Lagerbockes 3 abstützt. Hierdurch ist gewährleistet, daß sich das Sicherungselement 31 in der eine Verriegelungsposition gemäß den Figuren 1 bis 3 befindet, wenn in die Steckdose 21 kein Stecker eingeführt ist.

In Figur 7 ist eine weitere Variante einer durch ein einzelnes Sicherungselement 41 gebildeten Entnahmesicherung 40 dargestellt.

Auch dieses Sicherungselement 41 weist einen Betätigungsabschnitt 42 auf, über den das Sicherungselement 41 in gleicher Weise mit einem Steckerelement zusammenwirken kann wie das vorstehend beschriebene Sicherungselement 31.

Ferner weist das Sicherungselement 41 einen abgewinkelten flächigen Abschnitt 46 mit einer Versteifung 47 und Clipselementen 44 auf, der jeweils durch einen oberen und einen unteren Rand 48 begrenzt wird. Funktion und Aufbau dieses flächigen Abschnitts entsprechen dem anhand der Figur 6 erläuterten.

An seinem vorderen Ende ist das Sicherungselement 41 mit einer Einhängung 43 versehen, über die es in eine geeignete Öffnung eines Lagerbockes 3 (vergl. Figuren 1 bis 5) eingehängt werden kann. An die Einhängung 43 schließt sich ein Biegebereich 49 an, in dem das Sicherungselement 41 derart geformt ist, daß es bei einer Belastung des Betätigungsabschnitts 42 durch ein Steckerelement eine Schwenkbewegung ausführt, wie sie anhand der Figuren 4 und 5 erläutert wurde.

Ein Teil des sich an die Einhängung 43 anschließenden Abschnitts wirkt dabei als Federelement 45, über das sich das Sicherungselement 41 an einer äußeren Wand eines Lagerbockes 3 (vergl. Figuren 1 bis 3) derart abstützt, daß eine Entriegelung des Verriegelungsmechanismus nicht behindert wird, solange kein Steckerelement in den Stecker 21 (vergl. Figuren 1 bis 3) eingefügt ist.

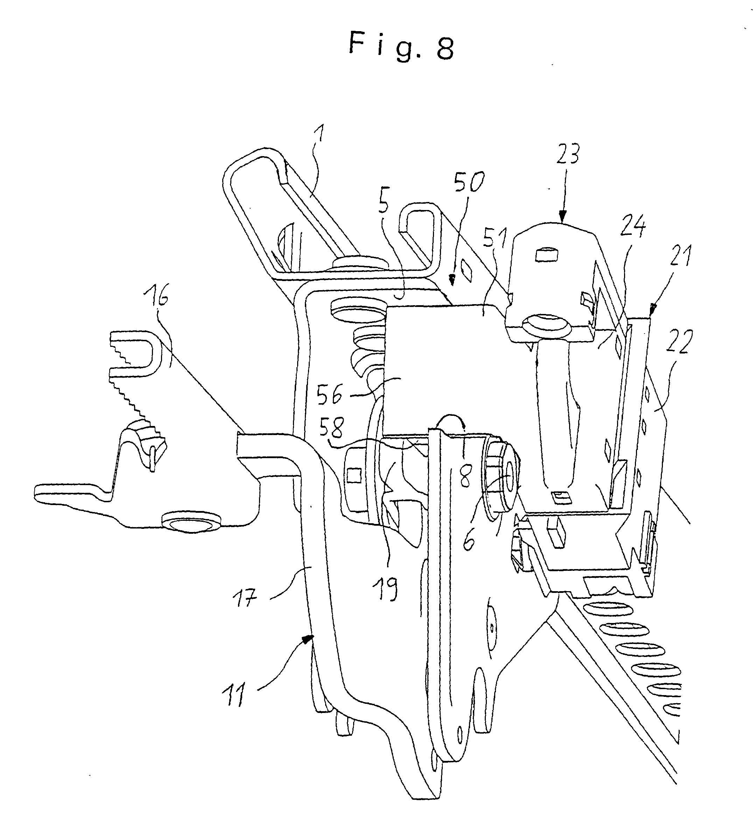

In Figur 8 ist ein weiteres Ausführungsbeispiel einer Entnahmesicherung 50 für einen Verriegelungsmechanismus 10 dargestellt, wie er anhand der Figuren 1 bis 5 erläutert wurde.

Diese Entnahmesicherung 50 umfaßt ein einzelnes Sicherungselement 51, das unmittelbar an dem Gehäuse 24 eines fahrzeugseitigen Steckers 23 angeformt ist. Dabei sind vorzugsweise das Gehäuse 24 und das Sicherungselement 51 als Outsert-Teile ausgebildet.

Das in Figur 8 gezeigte Ausführungsbeispiel unterscheidet sich von den Ausführungsbeispielen aus den Figuren 1 bis 5 weiterhin dadurch, daß die Öffnung 8 in dem Lagerbock 3 vorliegend ein Einschieben des Sicherungselementes 51 zwischen das Sperrelement 19 und den Anschlag 5 parallel zur Einführrichtung des Steckers 23 in die Steckdose 21 gestattet.

Hierdurch wird in gleicher Weise wie oben anhand der Figuren 4 und 5 erläutert wurde, eine Entriegelung des Verriegelungsmechanismus 10 verhindert, da der durch Kanten 58 begrenzte flächige Abschnitt 56 des Sicherungselements 51 eine Schwenkbewegung des Sperrelementes 19 und damit auch des Verriegelungselements 17 ausschließt.

## Patentansprüche

1. Vorrichtung zur lösbaren Befestigung eines Fahrzeugsitzes oder von Teilen eines Fahrzeugsitzes, der mindestens ein mit einem fahrzeugseitigen elektrischen Kontaktelement (23) koppelbares elektrisches Kontaktelement (21) aufweist, in einem Kraftfahrzeug mit
a) einem Verriegelungsmechanismus (10), der zur Entnahme eines Sitzes oder von Teilen eines Sitzes aus einem Kraftfahrzeug entriegelbar ist, und
b) einer Entnahmesicherung (30, 40, 50), die mittels mindestens eines Sicherungselementes (31, 41, 51) eine Entriegelung des Verriegelungsmechanismus (10) verhindert, wenn die beiden Kontaktelemente (21, 23) gekoppelt sind,
**dadurch gekennzeichnet,**
**daß** die Entnahmesicherung (30, 40, 50) aus einem Sicherungselement (31, 41, 51) besteht, das bei gekoppelten Kontaktelementen (21, 23) zwischen einem beweglichen Sperrelement (19) des Verriegelungsmechanismus (10) und einem mit dem Fahrzeugsitz verbundenen Anschlag (5) angeordnet ist und beim Versuch einer Entriegelung von dem Sperrelement (19) gegen den Anschlag (5) gedrückt wird.

2. Vorrichtung nach Anspruch 1, **dadurch gekennzeichnet, daß** die von dem Sperrelement (19) auf das Sicherungselement (31, 41, 51) ausgeübten Kräfte auf den Anschlag (5) gerichtet sind, so daß das Sicherungselement (31, 41, 51) im wesentlichen nur Druckkräfte auf den Anschlag (5) überträgt.

3. Vorrichtung nach Anspruch 1 oder 2, **gekennzeichnet durch** eine derartige Anordnung des Sicherungselementes zwischen dem Sperrelement (19) und dem Anschlag (5), daß die von dem Sperrelement (19) ausgeübten Kräfte an der Seite (38, 48, 58) des Sicherungselementes (31, 41, 51) angreifen, die etwaigen Scherkräften das größte Widerstandsmoment entgegensetzt.

4. Vorrichtung nach Anspruch 2 oder 3, **dadurch gekennzeichnet, daß** das Sicherungselement (31, 41, 51) zumindest in einem Abschnitt (36, 46, 56) flächig ausgebildet ist und die von dem Sperrelement (19) ausgeübten Kräfte an einer Kante (38, 48) des flächigen Abschnittes (36, 46) angreifen.

5. Vorrichtung nach einem der Ansprüche 2 bis 4, **dadurch gekennzeichnet, daß** das Sicherungselement (31, 41) in dem Bereich, in dem die von dem Sperrelement (19) ausgeübten Kräfte angreifen, eine Versteifung (37) aufweist.

6. Vorrichtung nach einem der vorhergehenden Ansprüche, **dadurch gekennzeichnet, daß** das Sicherungselement (31, 41, 51) einstückig ausgebildet ist.

7. Vorrichtung nach einem der vorhergehenden Ansprüche, **dadurch gekennzeichnet, daß** das Sicherungselement (31, 41) als Blechteil ausgebildet ist.

8. Vorrichtung nach einem der Ansprüche 1 bis 7, **dadurch gekennzeichnet, daß** das Sicherungselement (51) als ein Outsert-Teil ausgebildet ist, bei dem in eine Kunststoffhülle metallische Funktionsbereiche eingespritzt sind.

9. Vorrichtung nach einem der vorhergehenden Ansprüche, **dadurch gekennzeichnet, daß** das Sicherungselement (31, 41) schwenkbar mit dem Fahrzeugsitz verbunden ist.

10. Vorrichtung nach Anspruch 9, **dadurch gekennzeichnet, daß** die Schwenkbarkeit durch einen in das Sicherungselement (31, 41) integrierten Biegebereich (39, 49) gewährleistet wird.

11. Vorrichtung nach Anspruch 10 oder 11, **dadurch gekennzeichnet, daß** das Sicherungselement (31, 41) über eine Einhängung (33, 43) mit dem Fahrzeugsitz verbunden ist.

12. Vorrichtung nach Anspruch 9 oder 10, **dadurch gekennzeichnet, daß** das Sicherungselement einstückig in das Gehäuse (22) des sitzseitigen Kontaktelementes (21) integriert ist.

13. Vorrichtung nach einem der vorhergehenden Ansprüche, **dadurch gekennzeichnet, daß** das Sicherungselement (31, 41) einen Betätigungsabschnitt (32, 42) aufweist, über den das Sicherungselement (31, 41) mit dem fahrzeugseitigen Kontaktelement (23) in Wirkverbindung tritt, wenn die Kontaktelemente (21, 23) gekoppelt werden, wobei das Sicherungselement (31, 41) zwischen das Sperrelement (19) und den Anschlag (5) geführt wird.

14. Vorrichtung nach einem der Ansprüche 10 bis 13, **dadurch gekennzeichnet, daß** an das Sicherungselement (31, 41) einstückig ein federnder Abschnitt (35, 45) angeformt ist, über den sich das Sicherungselement (31, 41) an dem Fahrzeugsitz abstützt und der einer Bewegung des Sicherungselementes (31, 41) zwischen das Sperrelement (19) und den Anschlag (5) entgegenwirkt.

15. Vorrichtung nach einem der Ansprüche 1 bis 8, **dadurch gekennzeichnet, daß** das Sicherungselement (51) mit dem fahrzeugseitigen Kontaktelement (23) verbunden ist.

16. Vorrichtung nach Anspruch 15, **dadurch gekennzeichnet, daß** das Sicherungselement (51) einstückig in das Gehäuse (24) des fahrzeugseitigen Kontaktelementes (23) integriert ist.

17. Vorrichtung nach einem der vorhergehenden Ansprüche, **dadurch gekennzeichnet, daß** der Verriegelungsmechanismus (10) über mindestens einen Lagerbock (3) mit der Unterschiene (1) einer Sitzlängsverstellung verbunden ist.

18. Vorrichtung nach Anspruch 17, **dadurch gekennzeichnet, daß** der Anschlag (5) an dem Lagerbock (3) ausgebildet ist.

19. Vorrichtung nach Anspruch 17 oder 18, **dadurch gekennzeichnet, daß** in dem Lagerbock (3) eine Durchgriffsöffnung (8, 9) für das Sicherungselement (31, 41, 51) vorgesehen ist.

20. Vorrichtung nach einem der Ansprüche 17 bis 19, **dadurch gekennzeichnet, daß** das Sperrelement (19) gemeinsam mit einem Verriegelungselement (17) des Verriegelungsmechanismus (10) verschwenkbar ist.

21. Vorrichtung nach Anspruch 20, **dadurch gekennzeichnet, daß** das Sperrelement (19) auf derselben Achse (6) lagert wie ein Verriegelungselement (17) des Verriegelungsmechanismus (10).

22. Vorrichtung nach einem der vorhergehenden Ansprüche, **dadurch gekennzeichnet, daß** die Kontaktelemente (21, 23) als Steckerelemente ausgebildet sind.

## Claims

1. Device for releasably fastening a vehicle seat or parts of a vehicle seat, which has at least one electric contact element (21) which can be coupled to an electric contact element (23) on the vehicle side, in a motor vehicle with
a) a locking mechanism (10), which can be unlocked to remove a seat or parts of a seat from a motor vehicle, and
b) a removal lock (30, 40, 50), which by means of at least one securing element (31, 41, 51) prevents unlocking of the locking mechanism (10) when the two contact elements (21,23) are coupled,
**characterised in that**
the removal lock (30, 40, 50) consists of a securing element (31, 41, 51) which when the contact elements (21, 23) are coupled is mounted between a movable locking element (19) of the locking mechanism (10) and a stop (5) connected to the vehicle seat, and which is forced against the stop (5) by the locking element (19) when an attempt is made at unlocking the seat.

2. Device according to claim 1, **characterised in that** the forces exerted by the locking element (19) on the securing element (31, 41, 51) are directed onto the stop (5) so that the securing element (31, 41, 51) transfers essentially only compression forces to the stop (5).

3. Device according to claim 1 or 2, **characterised by** an arrangement of the securing element between the locking element (19) and the stop (5) such that the forces exerted by the locking element (19) engage on the side (38, 48, 58) of the securing element (31, 41, 51) which provides the greatest resistance moment to any shear forces.

4. Device according to claim 2 or 3, **characterised in that** the securing element (31, 41, 51) is designed with a flat surface at least in one section (36, 46, 56) and the forces exerted by the locking element (19) engage on an edge (38, 48) of the flat surface section (36, 46) .

5. Device according to one of claims 2 to 4, **characterised in that** the securing element (31, 41) has a reinforcement (37) in the area in which the forces exerted by the locking element (19) engage.

6. Device according to one of the preceding claims, **characterised in that** the securing element (31, 41, 51) is formed in one piece.

7. Device according to one of the preceding claims, **characterised in that** the securing element (31, 41) is formed as a sheet metal part.

8. Device according to one of claims 1 to 7, **characterised in that** the securing element (51) is formed as an Outsert part in which metal function areas are injection moulded into a plastics cover.

9. Device according to one of the preceding claims, **characterised in that** the securing element (31, 41) is connected for swivel movement to the vehicle seat.

10. Device according to claim 9, **characterised in that** the swivel movement is guaranteed through a bending area (39, 49) integrated into that of the securing element (31, 41).

11. Device according to claim 10 or 11, **characterised in that** the securing element (31, 41) is connected to the vehicle seat through a suspension mounting (33, 43).

12. Device according to claim 9 or 10, **characterised in that** the securing element is integrated in one piece into the housing (22) of the contact element (21) on the seat side.

13. Device according to one of the preceding claims, **characterised in that** the securing element (31, 41) has an operating section (32, 42) through which the securing element (31, 41) enters into active connection with the contact element (23) on the vehicle side when the contact elements (21, 23) are coupled wherein the securing element (31, 41) is guided between the locking element (19) and the stop (5).

14. Device according to one of the claims 10 to 13, **characterised in that** a resilient section (35, 45) is formed in one piece on the securing element (31, 41) through which the securing element (31, 41) is supported on the vehicle seat and which counteracts movement of the securing element (31, 41) between the locking element (19) and the stop (5).

15. Device according to one of claims 1 to 8, **characterised in that** the securing element (51) is connected to the contact element (23) on the vehicle side.

16. Device according to claim 15, **characterised in that** the securing element (51) is integrated in one piece in the housing (24) of the contact element (23) on the vehicle side.

17. Device according to one of the preceding claims, **characterised in that** the locking mechanism (10) is connected to the lower rail (1) of a longitudinal seat adjustment device through at least one bearing block (3) .

18. Device according to claim 17, **characterised in that** the stop (5) is formed on the bearing block (3).

19. Device according to claim 17 or 18, **characterised in that** a passage opening (8, 9) for the securing element (31, 41, 51) is provided in the bearing block (3) .

20. Device according to one of claims 17 to 19, **characterised in that** the locking element (19) is able to swivel together with a lock element (17) of the locking mechanism (10).

21. Device according to claim 20, **characterised in that** the locking element (19) is mounted on the same axis (6) as a lock element (17) of the locking mechanism (10).

22. Device according to one of the preceding claims, **characterised in that** the contact elements (21, 23) are formed as plug elements.

## Revendications

1. Dispositif pour la fixation amovible d'un siège de véhicule ou de parties d'un siège de véhicule dans un véhicule automobile, siège qui comprend au moins un élément de contact électrique (21) susceptible d'être couplé à un élément de contact électrique (23) côté véhicule, comportant
a) un mécanisme de verrouillage (10) qui est susceptible d'être déverrouillé pour enlever un siège ou des parties d'un siège hors d'un véhicule automobile, et
b) un blocage anti-enlèvement (30, 40, 50) qui empêche un déverrouillage du mécanisme de verrouillage (10) au moyen d'au moins un élément de blocage (31, 41, 51), lorsque les deux éléments de contact (21, 23) sont couplés,
**caractérisé en ce que**
le blocage anti-enlèvement (30, 40, 50) est constitué par un élément de blocage (31, 41, 51) qui, les éléments de contact (21, 23) étant couplés, est agencé entre un élément d'arrêt mobile (19) du mécanisme de verrouillage (10) et une butée (5) reliée au siège de véhicule, et qui est pressé contre la butée (5) par l'élément d'arrêt (19) en cas de tentative de déverrouillage.

2. Dispositif selon la revendication 1, **caractérisé en ce que** les forces exercées par l'élément d'arrêt (19) sur l'élément de blocage (31, 41, 51) sont dirigées vers la butée (5), de sorte que l'élément de blocage (31, 41, 51) transmet sensiblement uniquement des forces de pression sur la butée (5).

3. Dispositif selon la revendication 1 ou 2, **caractérisé par** un agencement de l'élément de blocage entre l'élément d'arrêt (19) et la butée (5), tel que les forces exercées par l'élément d'arrêt (19) attaquent le côté (38, 48, 58) de l'élément de blocage (31, 41, 51), qui oppose le plus grand couple de résistance à des forces de cisaillement éventuelles.

4. Dispositif selon la revendication 2 ou 3, **caractérisé en ce que** l'élément de blocage (31, 41, 51) est réalisé en forme de surface dans au moins un tronçon (36, 46, 56), et les forces exercées par l'élément d'arrêt (19) attaquent une arête (38, 48) du tronçon en forme de surface (36, 46).

5. Dispositif selon l'une des revendications 2 à 4, **caractérisé en ce que** l'élément de blocage (31, 41) comprend une rigidification (37) dans la zone dans laquelle attaquent les forces exercées par l'élément d'arrêt (19).

6. Dispositif selon l'une des revendications précédentes, **caractérisé en ce que** l'élément de blocage (31, 41, 51) est réalisé d'un seul tenant.

7. Dispositif selon l'une des revendications précédentes, **caractérisé en ce que l**'élément de blocage (31, 41) est réalisé sous forme de pièce en tôle.

8. Dispositif selon l'une des revendications 1 à 7, **caractérisé en ce que** l'élément de blocage (51 ) est réalisé sous la forme d'une pièce rapportée extérieure dans laquelle des zones fonctionnelles métalliques sont surmoulées dans une enveloppe en matière plastique.

9. Dispositif selon l'une des revendications précédentes, **caractérisé en ce que** l'élément de blocage (31, 41) est relié avec faculté de pivotement au siège du véhicule.

10. Dispositif selon la revendication 9, **caractérisé en ce que** la mobilité de pivotement est assurée par une zone flexible (39, 49) intégrée dans l'élément de blocage (31, 41).

11. Dispositif selon la revendication 9 ou 10, **caractérisé en ce que** l'élément de blocage (31, 41) est relié au siège de véhicule via un moyen d'accrochage (33, 43).

12. Dispositif selon la revendication 9 ou 10, **caractérisé en ce que** l'élément de blocage est intégré en un seul tenant dans le boîtier (22) de l'élément de contact (21 ) côté siège.

13. Dispositif selon l'une des revendications précédentes, **caractérisé en ce que** l'élément de blocage (31, 41) comprend un tronçon d'actionnement (32, 42) via lequel l'élément de blocage (31, 41 ) vient en liaison d'action avec l'élément de contact (23) côté véhicule lorsque les éléments de contact (21, 23) sont couplés, l'élément de blocage (31, 41) étant guidé entre l'élément d'arrêt (19) et la butée (5).

14. Dispositif selon l'une des revendications 10 à 13, **caractérisé en ce qu'**un tronçon élastique (35, 45) est conformé d'un seul tenant sur l'élément de blocage (31, 41), tronçon via lequel l'élément de blocage (31, 41) s'appuie contre le siège de véhicule et qui s'oppose à un mouvement de l'élément de blocage (31, 41) entre l'élément d'arrêt (19) et la butée (5).

15. Dispositif selon l'une des revendications 1 à 8, **caractérisé en ce que** l'élément de blocage (51) est relié à l'élément de contact (23) côté véhicule.

16. Dispositif selon la revendication 15, **caractérisé en ce que** l'élément de blocage (51) est intégré d'un seul tenant dans le boîtier (24) de l'élément de contact (23) côté véhicule.

17. Dispositif selon l'une des revendications précédentes, **caractérisé en ce que** le mécanisme de verrouillage (10) est relié au rail inférieur (1) d'un dispositif de déplacement longitudinal de siège via au moins un bloc support (3).

18. Dispositif selon la revendication 17, **caractérisé en ce que** la butée (5) est réalisée sur le bloc support (3).

19. Dispositif selon la revendication 17 ou 18, **caractérisé en ce qu'**une ouverture (8, 9) d'engagement de l'élément de blocage (31, 41, 51) est prévue dans le bloc support (3).

20. Dispositif selon l'une des revendications 17 à 19, **caractérisé en ce que** l'élément d'arrêt (19) est mobile en pivotement conjointement avec un élément de verrouillage (17) du mécanisme de verrouillage (10).

21. Dispositif selon la revendication 20, **caractérisé en ce que** l'élément d'arrêt (19) est monté sur le même axe (6) qu'un élément de verrouillage ( 17) du mécanisme de verrouillage (10).

22. Dispositif selon l'une des revendications précédentes, **caractérisé en ce que** les éléments de contact (21, 23) sont réalisés sous forme d'éléments enfichables.
